# EUROPEAN PATENT APPLICATION

(11) **EP 4 517 964 A1**
(43) Date of publication of application: **05.03.2025**
(21) Application number: 24160557.5
(22) Date of filing: 29.02.2024
(51) Int. Cl.: H01M 50/211, H01M 50/264, H01M 50/291, H01M 50/293, H01M 50/507, H01M 10/613, H01M 10/647, H01M 10/658

(54) **BATTERY MODULE, ASSEMBLY APPARATUS FOR BATTERY MODULE AND ASSEMBLY METHOD OF BATTERY MODULE**

(30) Priority: 04.09.2023 KR 20230117270
(71) Applicant: SK On Co., Ltd., Seoul 03161 (KR)
(72) Inventor: JUNG, Yong Hun, 34124 Daejeon (KR); KIM, Wook Hyun, 34124 Daejeon (KR); SUNG, Ju Hwan, 34124 Daejeon (KR)
(74) Representative: Prüfer & Partner mbB Patentanwälte · Rechtsanwälte

(57) **Abstract**

A battery module includes a cell assembly including a plurality of battery cells including a case containing an electrode assembly, a sealing portion formed by sealing the case, and an electrode lead exposed to an outside of the case, a bus bar assembly electrically connected to the electrode lead, a plate portion covering the cell assembly and the bus bar assembly, and at least one heat blocking member disposed to face the sealing portion and the bus bar assembly. The heat blocking member is solid.

## Description

### TECHNICAL FIELD

The present disclosure relates to a battery module, an assembly apparatus for the battery module, and a method of assembling the battery module.

### BACKGROUND

Batteries are widely used in medium-to-large mechanical devices such as electric vehicles (EVs) as well as small electronic devices such as mobile phones and laptops, and have the advantage of being rechargeable and reusable.

### SUMMARY

The present disclosure may be implemented in some embodiments to provide a battery module with delayed thermal runaway and heat propagation.

The present disclosure may be implemented in some embodiments to provide a battery module in which thermal runaway and heat propagation are prevented and durability is improved.

The present disclosure may be implemented in some embodiments to provide a battery module having improved convenience and efficiency of assembly work.

The present disclosure may also be widely applied in green technology fields such as solar power generation and wind power generation.

In addition, the present disclosure may be applied to eco-friendly devices such as eco-friendly electric vehicles, hybrid vehicles, and the like, to ameliorate climate change by suppressing air pollution and greenhouse gas emissions.

In some embodiments of the present disclosure, a battery module includes a cell assembly including a plurality of battery cells including a case containing an electrode assembly, a sealing portion formed by sealing the case, and an electrode lead exposed to an outside of the case; a bus bar assembly electrically connected to the electrode lead; a plate portion covering the cell assembly and the bus bar assembly; and at least one heat blocking member disposed to face the sealing portion and the bus bar assembly. The heat blocking member is solid.

The heat blocking member may be disposed in a separation space formed by a sealing portion of a pair of neighboring battery cells, an electrode lead of the pair of battery cells and the bus bar assembly, and may be inserted into the separation space in a solid state.

The heat blocking member may be disposed to face the sealing portion and the bus bar assembly in a cross-section of the battery cell in a thickness direction.

The heat blocking member may be provided in plural and respectively disposed between the pair of neighboring battery cells.

A height of the heat blocking member in a cross section of the battery cell in a height direction may have a value of 90% or more and 110% or less of a height of the battery cell.

The heat blocking member may include a first inclined area, inclined from one end toward a center of the heat blocking member based on a height direction, and may have a thinnest thickness on the one end.

The heat blocking member may include a second inclined area, inclined from the other end toward the center thereof based on the height direction of the heat blocking member, and may have a thickness on the other end, being the same as the thickness on the one end.

The heat blocking member may be formed of a material containing at least one of polyurethane, silica gel, a polymer material containing glass fiber, and mica.

On the other hand, as another aspect, the present disclosure provides an assembly apparatus for a battery module.

In some embodiments of the present disclosure, an assembly apparatus for a battery module includes a device base; a worktable provided with a pre- battery module seated thereon and moving on the device base, the pre-battery module including a cell assembly including a plurality of battery cells including a case containing an electrode assembly, a sealing portion formed by sealing the case and an electrode lead exposed to an outside of the case, a bus bar assembly electrically connected to the electrode lead, and a plate portion covering the cell assembly and the bus bar assembly; a cell assembly alignment portion including an alignment member inserted into a separation space formed by a sealing portion of a pair of the battery cells neighboring each other, electrode leads of the pair of battery cells, and the bus bar assembly; and a heat blocking member insertion portion inserting a solid type of a heat blocking member into the separation space when the alignment member is separated from the separation space and assembling as the battery module.

The cell assembly alignment portion may further include an alignment member moving portion connected to the alignment member and moving the alignment member.

The heat blocking member insertion portion may include a grip member supporting the heat blocking member; a pressing member pushing the heat blocking member supported by the grip member, into the separation space; and a pressing member moving portion connected to the pressing member and moving the pressing member.

The heat blocking member insertion portion may further include a pressure sensor connected to at least one of the pressing member and the pressing member moving portion and obtaining information on pressure applied to at least one of the pressing member and the pressing member moving portion.

The grip member may include a first grip member including a first support groove having a shape corresponding to an outer peripheral surface of the heat blocking member; and a second grip member including a second support groove having a shape corresponding to the outer peripheral surface of the heat blocking member, and the heat blocking member insertion portion may further include a grip member moving portion connected to the first grip member and the second grip member and moving the first grip member and the second grip member.

The assembly apparatus for a battery module may further include an inspection unit provided on the device base and acquiring at least one of height information of the battery cell and height information of the heat blocking member when the battery module is seated on the worktable, the inspection unit may include a support frame provided on the device base; and a position sensor provided on the support frame and acquiring at least one of height information of the battery cell and height information of the heat blocking member when the worktable enters the support frame.

On the other hand, as another aspect, the present disclosure provides a method of assembling a battery module.

In some embodiments of the present disclosure, as a method of assembling a pre-battery module including a cell assembly containing a plurality of battery cells including a case containing an electrode assembly, a sealing portion formed by sealing the case and an electrode lead exposed to an outside of the case, a bus bar assembly electrically connected to the electrode lead, and a plate portion covering the cell assembly and the bus bar assembly, a method of assembling a battery module includes inverting the pre-battery module; aligning the plurality of battery cells; assembling the battery module by inserting at least one solid heat blocking member into a separation space formed by a sealing portion of a pair of neighboring battery cells, an electrode lead of the pair of battery cells, and the bus bar assembly; and the method of assembling a battery module may further include obtaining at least one of height information of the heat blocking member inserted into the separation space and height information of the battery cell, after the aligning the plurality of battery cells.

### BRIEF DESCRIPTION OF DRAWINGS

Certain aspects, features, and advantages of the present disclosure are illustrated by the following detailed description with reference to the accompanying drawings.
FIG. 1 is an exploded perspective view of a battery module according to an embodiment.
FIG. 2 is a bottom view of a portion of a battery module and illustrates that a bus bar assembly is illustrated in cross section.
FIG. 3 is a bottom view of a portion of a battery module into which a heat blocking member is inserted and illustrates that a bus bar assembly is illustrated in cross section.
FIG. 4 is a perspective view of a heat blocking member according to an embodiment.
FIG. 5 is a front view of a battery cell and a heat blocking member according to an embodiment.
FIG. 6 is a perspective view of a heat blocking member inserted between a pair of battery cells.
FIG. 7 schematically illustrates an assembly apparatus for a battery module according to an embodiment.
FIG. 8 is a diagram illustrating the operating state of a cell assembly alignment portion.
FIG. 9 schematically illustrates a heat blocking member insertion portion according to an embodiment.
FIG. 10 is a diagram illustrating the operating state of a heat blocking member insertion portion according to an embodiment.
FIG. 11 is a bottom view of a grip member according to an embodiment.
FIG. 12 is an operation state diagram of FIG. 11.
FIG. 13 schematically illustrates an assembly apparatus for a battery module according to another embodiment.
FIG. 14 schematically illustrates an inspection unit according to an embodiment.
FIG. 15 is a conceptual diagram of a method of assembling a battery module according to an embodiment.
FIG. 16 is a conceptual diagram of a method of assembling a battery module according to another embodiment.

### DETAILED DESCRIPTION

Features of the present disclosure disclosed in this patent document are described by example embodiments with reference to the accompanying drawings.

Battery cells constituting a battery may be manufactured by storing an electrode assembly comprised of a positive electrode plate, a negative electrode plate, and a separator in a case, injecting an electrolyte into the case, and then sealing the case.

A battery module may be formed by stacking a plurality of battery cells, and a battery pack may be formed by gathering a plurality of battery modules.

During use of a battery module or a battery pack, ignition may occur due to high-temperature venting gas, flame, sparks, or the like. Since a battery module or a battery pack has a structure in which multiple battery cells are gathered together, it is necessary to quickly prevent heat, flame, or sparks from ignited battery cells, from spreading or transferring to other battery cells.

As such, delaying or preventing thermal runaway or thermal propagation in a battery module or a battery pack may be a very important factor in improving battery safety.

To facilitate understanding of the description of embodiments of the present disclosure, elements indicated with the same reference numerals in the attached drawings are the same elements. Some components in the attached drawings are exaggerated, omitted, or schematically illustrated, and the size of each component does not completely reflect the actual size.

Hereinafter, the present disclosure will be described in detail with reference to the attached drawings.

Hereinafter, the X-axis illustrated in the drawing is the thickness direction of a battery cell 111, the Y-axis is the longitudinal direction of the battery cell 111, and the Z-axis is the height direction of the battery cell 111. However, this is an arbitrarily set direction for convenience of description, and the above-mentioned directions may be changed.

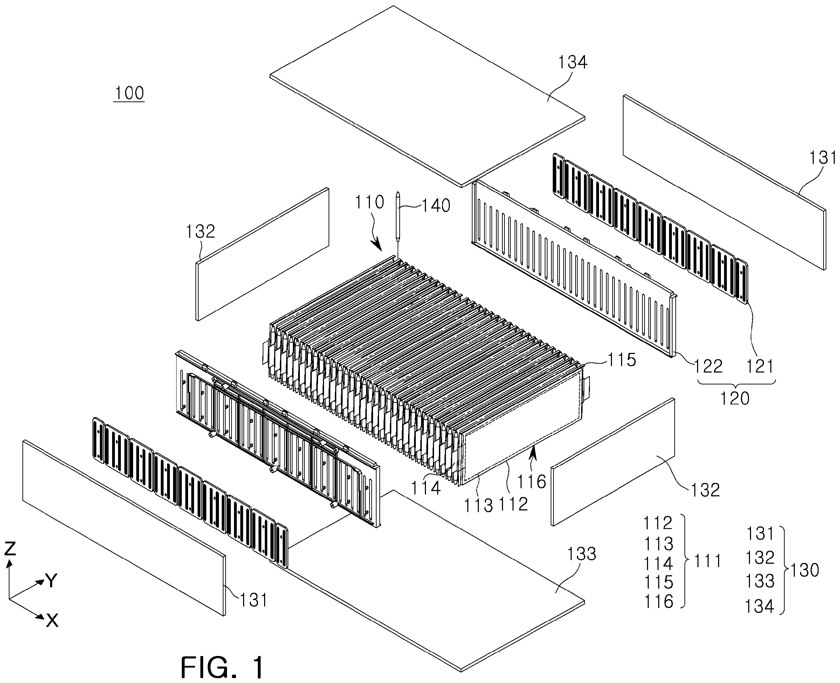

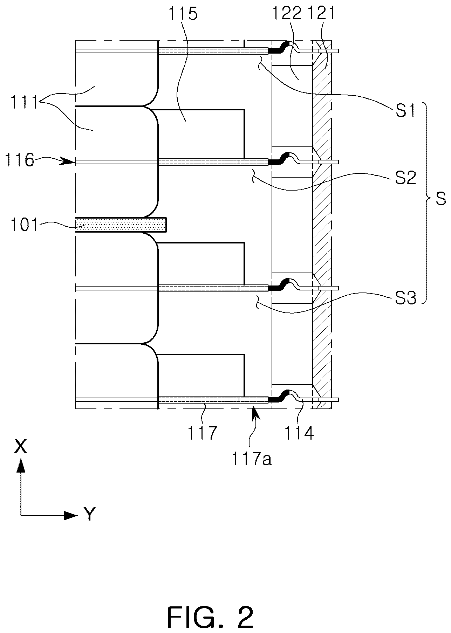

FIG. 1 is an exploded perspective view of a battery module 100 according to an embodiment, and FIG. 2 is a bottom view of a partial area of the battery module and illustrates that a bus bar assembly is illustrated in cross section.

As illustrated in FIGS. 1 and 2, the battery module according to an embodiment may include a cell assembly 110 having a plurality of battery cells 111 including a case 112 in which an electrode assembly 113 is accommodated, a sealing portion 115 formed by sealing the case 112, and an electrode lead 114 exposed to the outside of the case 112, a bus bar assembly 120 electrically connected to the electrode lead 114, a plate portion 130 covering the cell assembly 110 and the bus bar assembly 120, and a heat blocking member 140 disposed to face at least one of the electrode lead 114, the sealing portion 115, and the bus bar assembly 120. The heat blocking member 140 may be solid.

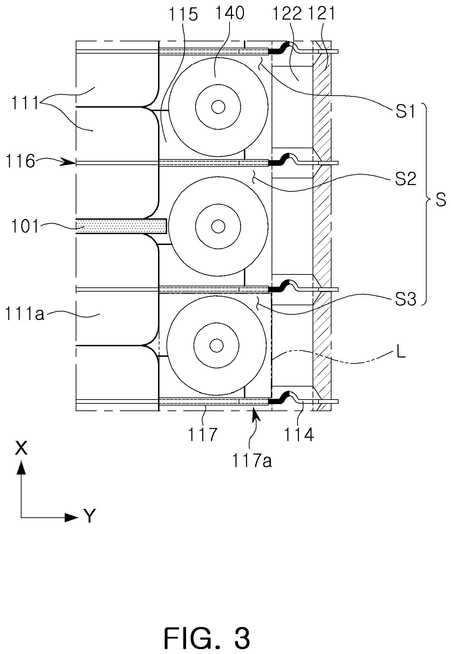

The battery cell 111 may have a form in which a positive electrode plate, a negative electrode plate, a separator, and an electrolyte are disposed inside the case 112. The electrode assembly 113 may be comprised of a positive electrode plate, a negative electrode plate, and a separator interposed between the positive electrode plate and the negative electrode plate. The area in the case 112 where the electrode assembly 113 is accommodated may be an electrode assembly receiving portion (111a in FIG. 3).

The battery cell 111 may include the electrode assembly receiving portion (111a in FIG. 3), a folding portion 116, and the sealing portion 115. The folding portion 116 may be an area formed by folding one side of the case 112. With the electrode assembly 113 placed on the case 112, one side of the case 112 is folded to form the folding portion 116, and with both ends of the case 112 placed facing each other, the sealing portion 115 may be formed by sealing the remaining area excluding the folding portion 116.

The sealing portion 115 may be provided as a plurality of sealing portions 115 in the Y-Z plane. The plurality of sealing portions 115 may include a pair of sealing portions 115 connected to one side and the other side of the folding portion 116 in the Y-Z plane, respectively, and another sealing portion 115 connected to the pair of sealing portions 115 and facing the folding portion 116 with the electrode assembly 113 therebetween. Accordingly, the case 112 may be sealed by the sealing portion 115 and the folding portion 116. The sealing portion 115 may be an area formed by sealing the case 112 using a method such as heat fusion.

In an embodiment, the sealing portion 115 may be disposed in three edge areas of the case 112. One edge area may be an area where the positive electrode lead 114 protrudes from the case 112, another edge area may be an area where the negative electrode lead protrudes, and another edge area may be a topmost area of the case 112 in the height direction (Z-axis direction) of the battery cell 111. In an embodiment, the area of the sealing portion 115 disposed at the topmost part in the height direction of the battery cell 111, for example, the area of the sealing portion 115 facing the folding portion 116 with the electrode assembly 113 interposed therebetween may have a form in which the end of the case 112 is rolled and fixed with adhesive or the like.

The battery cell 111 may have a shape in which respective electrode leads 114 connected to the positive and negative electrode plates protrude out of the case 112. The plurality of electrode leads 114 may have a bidirectional cell shape protruding from both sides of the battery cell 111, and may also have a unidirectional cell shape in which the plurality of electrode leads 114 all protrude from one side of the battery cell 111. In the present disclosure, a bidirectional cell type is used as an example.

Some areas of the electrode lead 114 may be exposed to the outside of the case 112 before forming the sealing portion 115. With a portion of the electrode lead 114 exposed to the outside of the case 112, the case 112 may be sealed to seal the area where the electrode assembly 113 is accommodated.

Electrode tabs may protrude from the positive and negative electrode plates, respectively. Respective electrode tabs may be combined with respective electrode leads 114, and a coupling portion 117a of the electrode tab and the electrode lead 114 may be located on a terrace portion 117. The terrace portion 117 may refer to the space remaining in the case 112, excluding the electrode assembly 113. The terrace portion 117 may include the sealing portion 115, and the coupling portion 117a of the electrode tab and the electrode lead 114 may be disposed in the terrace portion 117. In an embodiment, an insulating member may be provided on the coupling portion 117a of the electrode tab and the electrode lead 114.

The heat blocking member 140 may be disposed to face the terrace portion 117. Additionally, in an embodiment, the heat blocking member 140 may be disposed to face the coupling portion 117a of the electrode tab and the electrode lead 114.

The cell assembly 110 may be formed by stacking a plurality of battery cells 111 formed as above. Among the plurality of battery cells 111, a pair of neighboring battery cells 111 may be placed such that the electrode assembly receiving portions (111a in FIG. 3) may face each other and the sealing portions 115 may face each other. The plurality of battery cells 111 may be stacked according to this principle.

The bus bar assembly 120 may include a bus bar member 121 electrically connected to the electrode lead 114 and a bus bar plate 122 supporting the bus bar member 121. The electrode lead 114 may be connected to the bus bar member 121 by welding. In an embodiment, the bus bar plate 122 may also be disposed between the battery cell 111 and the bus bar member 121, and may be provided as an insulating material and may perform an insulating function.

In an embodiment, the heat blocking member 140 may be disposed to face the bus bar assembly 120 and the sealing portion 115 facing the bus bar assembly 120. For example, the heat blocking member 140 may be disposed to simultaneously face the bus bar assembly 120 and the sealing portion 115 facing the bus bar assembly 120. For example, the sealing portion 115 disposed in the area where the electrode lead 114 connected to the positive electrode plate of the battery cell 111 is disposed may face the bus bar assembly 120 to which the electrode lead 114 connected to the positive electrode plate is connected. In addition, another sealing portion 115 disposed in the area where another electrode lead 114 connected to the negative electrode plate of the battery cell 111 is disposed may face a bus bar assembly 120 to which the electrode lead 114 connected to the negative electrode plate is connected. In this manner, in the Y-Z plane, the pair of sealing portions 115 may be disposed to be spaced apart from each other with the electrode assembly 113 therebetween, and a pair of bus bar members 121 and a pair of bus bar plates 122 may also be disposed to be spaced apart from each other with the electrode assembly 113 therebetween.

Accordingly, the heat blocking member 140 may be disposed in both the area where one electrode lead 114 of the battery cell 111 is disposed and the area where the other electrode lead 114 is disposed. In an area where the electrode lead 114 connected to the positive electrode plate and the electrode lead 114 connected to the negative electrode plate are disposed, the heat blocking member 140 may be disposed to simultaneously face the sealing portion 115 and the bus bar assembly 120 disposed in the corresponding area. For example, the heat blocking member 140 may be disposed to face the sealing portion 115 disposed in the corresponding area and to also at least a portion of the bus bar assembly 120 disposed in the corresponding area, in the area where the electrode lead 114 connected to the positive electrode plate and the electrode lead 114 connected to the negative electrode plate are disposed.

The plate portion 130 may be disposed to cover the cell assembly 110 and the bus bar assembly 120. In an embodiment, the plate portion 130 may include a plurality of first plate members 131 facing the bus bar plate 122, and a plurality of second plate members 132 facing an outermost battery cell 111 on one side of the cell assembly 110 and an outermost battery cell 111 on the other side of the cell assembly 110.

In an embodiment, the plate portion 130 may further include a third plate member 133 disposed at the bottom of the battery module in the Z-axis direction and facing the bottom surface of the battery cell 111, and a fourth plate member 134 disposed at the top in the Z-axis direction and facing the top surface of the battery cell 111. The fourth plate member 134 may cover the top portion of the cell assembly 110, and may have a venting hole (not illustrated) formed for venting. An insulating material such as a mica sheet or a polycarbonate sheet may be disposed between the fourth plate member 134 and the cell assembly 110. However, this is not necessarily limited by the present disclosure, and may be appropriately selected and applied depending on the specifications of the battery module, the specifications of the battery pack formed by a plurality of battery modules, or the like.

Since the plurality of battery cells 111 are disposed in a battery module or battery pack, in a case in which a thermal event such as a flame or fire occurs in one of the battery cells 111, the transfer or propagation of this thermal event to other battery cells 111 should be minimized. The problem of preventing thermal events from transferring in the unit of the battery cell 111 may be significantly important to prevent thermal runaway of the battery module or battery pack.

A battery module according to an embodiment may include a plurality of heat blocking members 140. Additionally, each heat blocking member 140 may be respectively disposed between battery cells 111 of the cell assembly 110. In an embodiment, the heat blocking member 140 may be disposed between the electrode leads 114 of a pair of neighboring battery cells 111. In the case of a bidirectional battery cell, the heat blocking member 140 may be disposed between the positive electrode leads 114 and the negative electrode leads 114 of a pair of battery cells 111, respectively. The heat blocking member 140 may also be disposed between the negative electrode leads 114 in the same principle as between the positive electrode leads 114. Hereinafter, the positive electrode lead 114 will be described as an example.

As illustrated in FIG. 2, a pair of neighboring battery cells 111 may be placed so that the electrode assembly receiving portions (111a in FIG. 3) face each other and the electrode leads 114 face each other. In this case, a pad 101 may be disposed between the battery cells 111. The pad 101 may be formed of an insulating material and, for example, may be formed of a material containing mica. The pad 101 may perform various roles, such as cooling the battery cell 111, providing surface pressure to the battery cell 111, and the like, and depending on the specifications of the battery module and the like, the application, material, number, and the like thereof may be appropriately selected and applied.

A pair of neighboring battery cells 111 may be placed such that the terrace portions 117 face each other and the electrode leads 114 also face each other. A separation space S may be formed between the terrace portions 117 and the electrode leads 114 of a pair of neighboring battery cells 111.

For example, the separation space S may include a first separation space S1 disposed at the top in the +X direction in FIG. 2, a second separation space S2 disposed below the first separation space S1, and a third separation space S3 disposed below the second separation space S2. The separation space S may be formed respectively between the plurality of battery cells 111 according to this principle.

The separation space S may be a space formed by the electrode assembly receiving portion (111a in FIG. 3) of a pair of neighboring battery cells 111, the terrace portion 117 of a pair of neighboring battery cells 111, the electrode lead 114 of a pair of neighboring battery cells 111, the bus bar member 121 and the bus bar plate 122. The separation space S may be covered by the electrode assembly receiving portion (111a in FIG. 3) of a pair of neighboring battery cells 111, the terrace portion 117 of a pair of neighboring battery cells 111, the electrode lead 114 of a pair of neighboring battery cells 111, the bus bar member 121 and the bus bar plate 122. The top portion of the separation space S may be covered with the fourth plate member (134 in FIG. 1). The bottom portion of the separation space S may be covered with a cooling plate (not illustrated) of the battery module or the third plate member (133 in FIG. 1) .

The first separation space S1 and the second separation space S2 may share one battery cell 111. Additionally, the second separation space S2 and the third separation space S3 may also share one battery cell 111. According to this principle, a plurality of separation spaces (S) may be disposed in the cell assembly 110.

FIG. 3 is a bottom view of a portion of the battery module into which the heat blocking member is inserted, and the bus bar assembly is illustrated in cross section. As illustrated in FIG. 3, the heat blocking member 140 may be inserted into the plurality of respective spaces S.

The heat blocking member 140 may be provided in a solid form. The heat blocking member 140 may be formed of a material having certain rigidity, certain strength, and certain hardness . In this case, the heat blocking member 140 may be formed of a material having enough rigidity, strength, and hardness to not damage the battery cell 111 or the bus bar assembly 120.

In an embodiment, the heat blocking member 140 may be formed of a material containing at least one of polyurethane, silica gel, a polymer material including glass fiber, and mica. Additionally, in an embodiment, the heat blocking member 140 may be formed of a material containing resin.

Additionally, in an embodiment, the heat blocking member 140 may be formed of a material containing polyurethane, and in another embodiment, the heat blocking member 140 may be formed of a material in which polyurethane and a curing agent are mixed. The curing agent may contribute to improving the physical properties of the heat blocking member 140. The heat blocking member 140 formed of resin may be injection molded.

The heat blocking member 140 may be pre-molded and have a solid form before assembly of the battery module is performed. Accordingly, since the molding work of the heat blocking member 140 is not performed within the battery module, the molding work of the heat blocking member 140 may be performed separately from the assembly work of the battery module.

In addition, the heat blocking member 140 having a solid form may maintain the form thereof before insertion into the separation space S even after insertion into the separation space S. For example, the heat blocking member 140 has no deformation of the outline thereof even after insertion into the separation space S, and the outline of the heat blocking member 140 before being inserted into the separation space S and the outline after being inserted into the separation space S may be the same.

In addition, the heat blocking member 140 may be inserted into the separation space S to face the terrace portion 117 and the electrode lead 114 in the thickness direction cross section of the battery cell 111, for example, in the X-Y plane. The outer surface of the heat blocking member 140 inserted into the separation space S may be disposed close to the battery cell 111, the electrode lead 114 and the bus bar assembly 120.

In the case of the heat blocking member 140 inserted into the separation space S where the pad 101 is disposed, the heat blocking member 140 may be disposed close to the end of the pad 101, but may be spaced apart from the end of the pad 101.

The heat blocking member 140 that has been inserted between the battery cells 111 may cover at least a portion of the electrode lead 114. Accordingly, when venting gas generated in the electrode assembly receiving portion 111a of the battery cell 111 opens the case 112 of the battery cell 111 and is discharged in the direction of the electrode lead 114, the venting gas faces the heat blocking member 140. The heat blocking member 140 delays the propagation of high-temperature venting gas to other adjacent battery cell 111 areas and may also serve to cool the high-temperature venting gas.

According to the heat blocking member 140, when a thermal event occurs, the transfer of heat, flame, and the like to other adjacent battery cells 111 may be delayed or significantly reduced.

In the cross-section of the battery cell 111 in the thickness direction, the heat blocking member 140 may be circular, but this is not necessarily limited by the present disclosure, and the cross-sectional shape of the heat blocking member 140 may be polygonal, which may be appropriately selected and applied considering the specifications of the battery module, venting characteristics, or the like.

When the heat blocking member 140 is circular in the thickness direction cross section of the battery cell 111, the thickness 145, for example, the diameter, of the heat blocking member 140 may be provided to have an intermediate fit or loose fit tolerance with the separation space S. In the fitting tolerance of the shaft and the hole, the diameter of the thickest part of the heat blocking member 140 may be the axis, and the perimeter of the separation space S may be formed as follows.

In an embodiment, a border (L) of the separation space S may be formed by two sides parallel to the X-axis and spaced a certain distance apart from each other and by two sides that are connected to the above sides, are spaced a certain distance apart from each other and are parallel to the Y-axis.

One border of the separation space S may be a line provided by extending the electrode assembly receiving portion 111a of the battery cell 111 in the X-axis direction, another border may be a line provided by extending the electrode lead 114 of one battery cell 111 in the Y-axis direction, another border may be a line provided by extending the area most protruding from the bus bar plate 122 toward the heat blocking member 140 in the X-axis direction, and another last border may be a line provided by extending the electrode lead 114 of the neighboring battery cell 111 in the Y-axis direction. In this manner, when one separation space S is replaced with a shape corresponding to an approximately quadrangular shape, the separation space S may become a hole.

In the tolerance of the shaft and the hole, the diameter of the heat blocking member 140 and the width of the separation space may be provided to have a mutually intermediate fit or loose fit tolerance. Accordingly, the heat blocking member 140 may not be separated from the separation space S without damaging the battery cell 111 and the bus bar assembly 120.

In the case in which the pad 101 is disposed in the separation space S, a line extending from the end of the pad 101 in the X-axis direction may be one border of the separation space S.

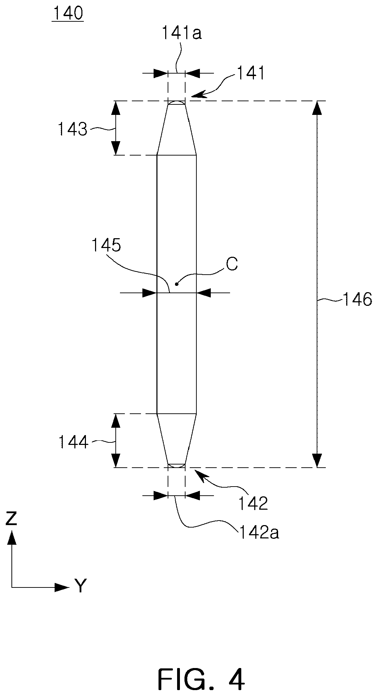

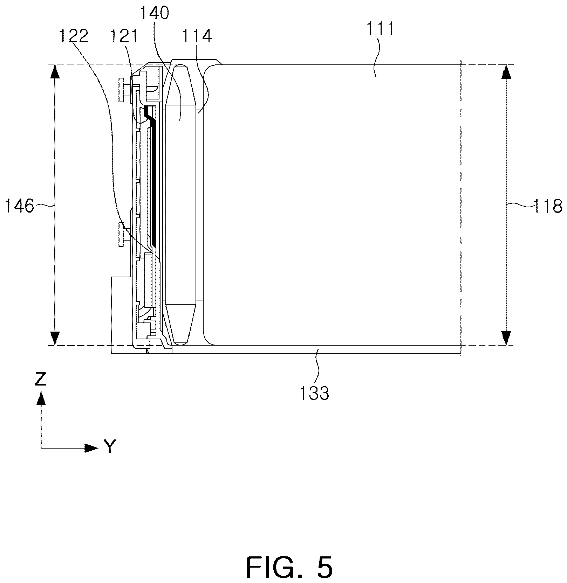

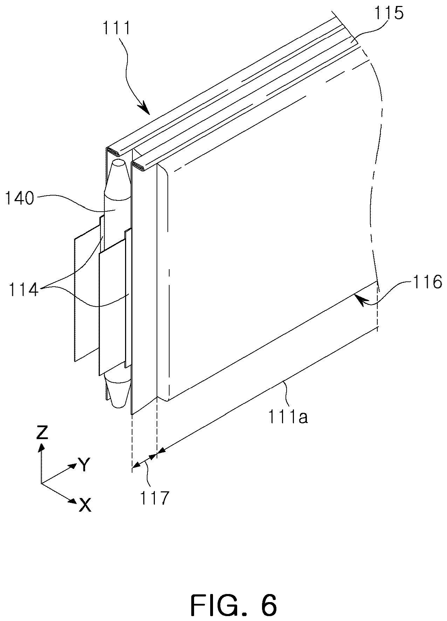

FIG. 4 is a perspective view of the heat blocking member 140 according to an embodiment, FIG. 5 is a front view of the battery cell 111 and the heat blocking member 140 according to an embodiment, and FIG. 6 is a perspective view of the heat blocking member 140 inserted between a pair of battery cells 111.

As illustrated in FIGS. 4 to 6, the heat blocking member 140 may include at least one of a first inclined area 143 and a second inclined area 144 in the height direction cross section of the battery cell 111, for example, in the Y-Z plane.

In an embodiment, the heat blocking member 140 may include the first inclined area 143 inclined from one end 141 of the heat blocking member 140 toward the center (C) of the heat blocking member 140, and the second inclined area 144 inclined from the other end 142 toward the center (C) . The center (C) of the heat blocking member 140 may be the center of gravity.

According to the first inclined area 143 and the second inclined area 144, the heat blocking member 140 may be easily inserted into the separation space S. In addition, since an inclined area is disposed no matter which direction the heat blocking member 140 is inserted, the directionality of the heat blocking member 140 may be eliminated when inserting the heat blocking member 140. This may improve the convenience of inserting the heat blocking member 140, and may contribute to improving the convenience of assembling the battery module and increasing the productivity of the battery module.

Additionally, in an embodiment, the heat blocking member 140 may be provided in a form in which a thickness 141a at one end 141 and a thickness 142a at the other end 142 are the thinnest. Additionally, in an embodiment, the heat blocking member 140 may have the thickness 141a at one end 141 and the thickness 142a at the other end 142, which are the same as each other. Accordingly, since the heat blocking member 140 has a symmetrical shape with respect to the center (C) thereof, the directionality of the heat blocking member 140 maybe eliminated. Additionally, the first inclined area 143 and the second inclined area 144 may contribute to removing unnecessary parts from the heat blocking member 140 and may contribute to a slight weight reduction of the heat blocking member 140.

Between the battery cells 111, one end 141 and the other end 142 of the heat blocking member 140 may be disposed outside the electrode lead 114. A height 146 of the heat blocking member 140 may have a value of 90% or more and 110% or less of a height 118 of the battery cell 111. In an embodiment, the height 146 of the heat blocking member 140 may be a value corresponding to 90% of the height of the battery cell 111. Therefore, the heat blocking member 140 may cover the electrode lead 114 and the terrace portion 117, and may also avoid interference with the fourth plate member (134 in FIG. 1) when the fourth plate member (134 in FIG. 1) is coupled to the top portion of the battery cell 111.

On the other hand, in an embodiment, the plate portion 130 may include the third plate member 133 disposed on the bottom of the battery cell 111. The third plate member 133 is provided as an insulating material and may be in contact with the bottom surface of the battery cell 111. In addition, in an embodiment, the third plate member 133 may be provided with a cooling pipe (not illustrated) and the like therein, and the cooling pipe (not illustrated) may be connected to a coolant pump and the like so that coolant may circulate in the cooling pipe (not illustrated) . Accordingly, bottom cooling of the battery cell 111 may be performed. However, this is not necessarily limited by the present disclosure and may be appropriately selected and applied by those skilled in the art.

On the other hand, when the third plate member 133 is provided, the end of the heat blocking member 140 may be in contact with the third plate member 133 and supported by the third plate member 133.

As illustrated in FIG. 6, when a top end portion of the battery cell 111 is in the form formed by rolling and pressing the sealing portion 115, the height 146 of the heat blocking member 140 may be set to a value of 90% or more and 95% or less of the height of the battery cell 111. Accordingly, the heat blocking member 140 may be prevented from interfering with the case 112 of the battery cell 111.

In inserting one heat blocking member 140 between a pair of battery cells 111, when the heat blocking member 140 faces the electrode lead 114 and the terrace portion 117, and in the case in which high-temperature venting gas flows out of the battery cell 111 while opening the terrace portion 117, heat propagation and heat transfer between the battery cells 111 may be blocked more efficiently.

As mentioned above, the terrace portion 117 may include an area corresponding to the outer periphery of the electrode assembly receiving portion 111a to the end of the case 112 in the -Y direction. Additionally, a connection portion between the electrode lead 114 and an electrode tab (not illustrated) may be disposed in the terrace portion 117. Additionally, the terrace portion 117 may include an area where the case 112 is sealed in the Z-axis direction and the Y-axis direction. In this case, the sealing portion 115 disposed in the terrace portion 117 may have a certain width in the Y-axis direction and may be disposed continuously in the Z-axis direction.

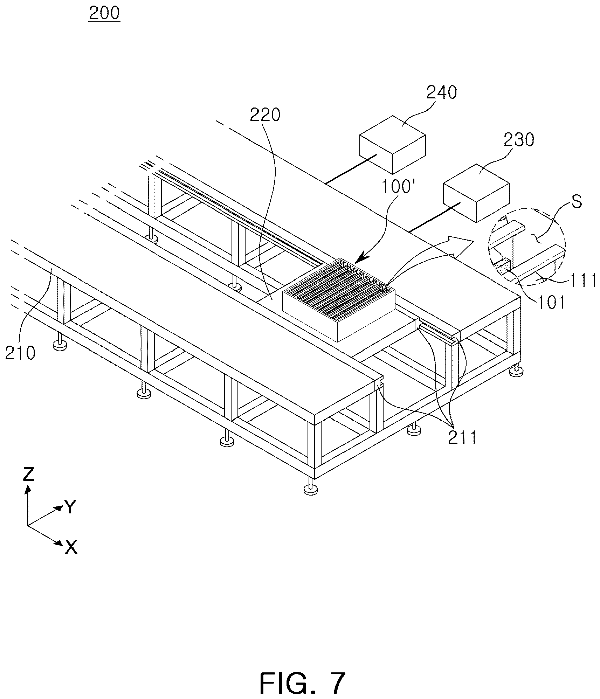

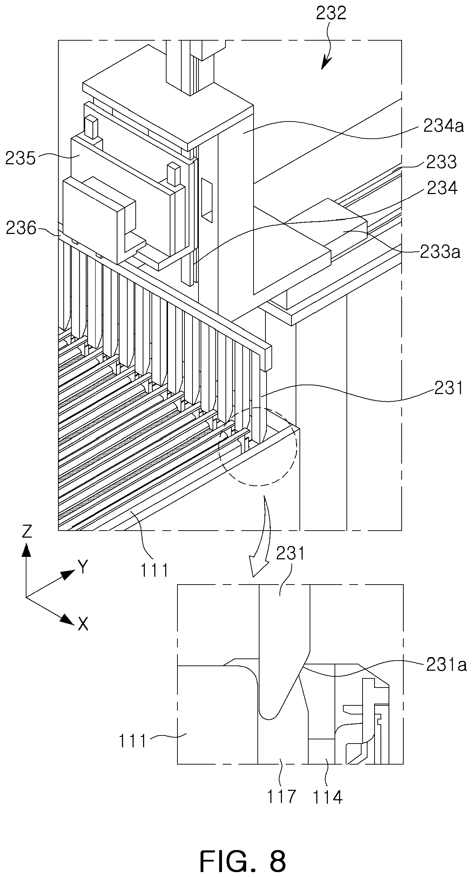

FIG. 7 schematically illustrates an assembly apparatus 200 for a battery module according to an embodiment, and FIG. 8 is a diagram illustrating the operating state of a cell assembly alignment portion 230.

As illustrated in FIG. 7, the assembly apparatus 200 for a battery module according to an embodiment may include a device base 210, a worktable 220 on which a pre-battery module 100' is seated, and moved from the device base 210, the pre-battery module 100' including a cell assembly (110 in FIG. 1) including a plurality of battery cells (111 in FIG. 1) including a case (112 in FIG. 1) in which an electrode assembly 113 is accommodated, a sealing portion (115 in FIG. 1) formed by sealing the case (112 in FIG. 1) and an electrode lead (114 in FIG. 1) exposed to the outside of the case (112 in FIG. 1), a bus bar assembly (120 in FIG. 1) electrically connected to the electrode lead (114 in FIG. 1), and a plate portion (130 in FIG. 1) covering the cell assembly (110 in FIG. 1) and the bus bar assembly (120 in FIG. 1), a cell assembly alignment portion 230 including an alignment member 231 inserted into a separation space S formed by the sealing portion (115 in FIG. 1) of a pair of neighboring battery cells 111, the electrode lead (114 in FIG. 1) of a pair of battery cells 111, and the bus bar assembly (120 in FIG. 1), and a heat blocking member insertion portion 240 inserting a solid heat blocking member 140 into the separation space S when the alignment member 231 is separated from the separation space S.

The pre-battery module 100' may be a battery module before the heat blocking member (140 in FIG. 1) is inserted. The assembly apparatus for a battery module may be made into a battery module by inserting or assembling a heat blocking member (140 in FIG. 1) into the pre-battery module 100'.

When the pre-battery module 100' is provided with a third plate member (133 in FIG. 1) and a fourth plate member (134 in FIG. 1), the pre-battery module 100' mounted on the worktable 220 may be in a state in which only the fourth plate member (134 in FIG. 1) is assembled and the third plate member (133 in FIG. 1) may be in an unassembled state. In this case, the fourth plate member (134 in FIG. 1) may be in contact with the worktable 220, and the pre-battery module 100' may be upside down in the Z-axis direction. The operation of inverting the pre-battery module 100' and bringing the fourth plate member (134 in FIG. 1) into contact with the worktable 220 may be performed automatically or manually by an operator.

The third plate member (133 in FIG. 1) may be combined with at least one of the first, second, and fourth plate members (131, 132, and 134 in FIG. 1) to cover the battery cell 111 after the insertion work of the heat blocking member (140 in FIG. 1) is completed. As a result, the battery cell 111 may be accommodated inside the first, second, third, and fourth plate members (131, 132, 133, and 134 in FIG. 1).

On the other hand, the device base 210 and the worktable 220 on which the pre-battery module 100' is mounted may be provided with a device LM (Linear Motion) guide 211. The worktable 220 may be moved on the device base 210 by the device LM guide 211. The device LM guide 211 may be connected to a control unit (not illustrated), and the control unit (not illustrated) may control whether the worktable 220 moves, the moving distance, and the moving speed. In an embodiment, the control unit (not illustrated) may be a Programmable Logic Controller (PLC) device.

The worktable 220 moves along the device base 210 and sequentially passes through the cell assembly alignment portion 230 and the heat blocking member insertion portion 240. In an embodiment, the worktable 220 may be controlled to first pass through the cell assembly alignment portion 230 and then reach the heat blocking member insertion portion 240.

The pre-battery module 100' may become a battery module equipped with a heat blocking member (140 in FIG. 1) after sequentially passing through the cell assembly alignment portion 230 and the heat blocking member insertion portion 240.

The pre-battery module 100' in which insertion of the heat blocking member (140 in FIG. 1) has been completed may be transferred to a post process. The task of transferring the pre-battery module 100' to a post-process may also be automatically performed by the device LM guide 211 installed on the device base 210.

The cell assembly alignment portion 230 includes an alignment member 231, and after inserting the alignment member 231 into the separation space S, the alignment member 231 may be removed again from the separation space S to complete the alignment of the battery cells 111.

In describing in more detail with reference to FIG. 8, the cell assembly alignment portion 230 may include the alignment member 231 and an alignment member moving portion 232 that is connected to the alignment member 231 and moves the alignment member 231.

In an embodiment, the alignment member moving portion 232 may include a first direction moving portion 233 disposed in a direction parallel to the Y-axis and a second direction moving portion 234 disposed in a direction parallel to the Z-axis . The first direction moving portion 233 and the second direction moving portion 234 may be provided as LM guides, and may be connected to a control unit (not illustrated) and operation thereof may be controlled by the control unit (not illustrated) .

In an embodiment, a first moving frame 233a may be connected to the first direction moving portion 233. The first moving frame 233a may be moved in the +Y direction and -Y direction by the first direction moving portion 233.

A second moving frame 234a may be connected to the first moving frame 233a. The second moving frame 234a may be provided with the above-described second direction moving portion 234. The second direction moving portion 234 may be provided in the second moving frame 234a in a direction parallel to the Z-axis.

A third moving frame 235 may be engaged with the second direction moving portion 234. The third moving frame 235 may be moved by the second direction moving portion 234 in the +Z direction and -Z direction.

An alignment frame 236 may be provided below the third moving frame 235. The alignment frame 236 is provided to have a certain length in the X-axis direction and may be fixed to the third moving frame 235. Therefore, the alignment frame 236 may be moved in the +Y, -Y, +Z, and -Z directions.

The alignment member 231 may be fixed to the bottom portion of the alignment frame 236. The alignment members 231 may be provided in plural, and the plurality of alignment members 231 may be spaced apart from each other at a certain distance on the alignment frame 236.

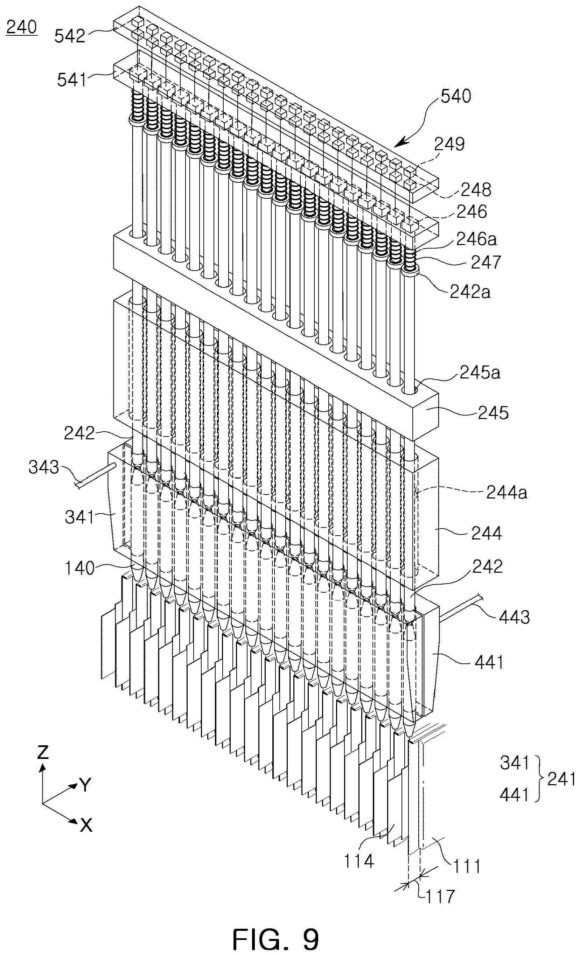

The thickness of the alignment member 231 may be at least the same as the thickness of the heat blocking member (140 in FIG. 9). The alignment member 231 may be moved along the alignment frame 236, and may be inserted between a plurality of battery cells 111 that have entered the bottom portion of the alignment member 231. The lowering operation of the alignment member 231 may be performed by the second direction moving portion 234. However, the number, shape and the like of the frames described above are according to an embodiment of the present disclosure, and the number, combination relationship, shape and the like of the frames may be replaced by various forms to implement movement of the alignment member.

In an embodiment, the alignment member 231 may be configured to move in directions of three axes, the X-axis, Y-axis and Z-axis. Various components may be combined to implement three-axis movement of the alignment member 231, and three-axes movements may also be obtained by combining multiple LM guides. However, the units for implementing the movement of the alignment member 231 are not necessarily limited by the present disclosure and may be appropriately selected and applied by those skilled in the art.

On the other hand, in an embodiment, the alignment member 231 may include an inclined section 231a inclined from an end toward the center thereof. The inclined section 231a of the alignment member 231 may facilitate the insertion of the alignment member 231 between the battery cells 111.

The second direction moving portion 234 may be configured to move the alignment member 231 in the -Z direction until the end of the alignment member 231 contacts the bottom surface of the pre-battery module 100'. Additionally, the second direction moving portion 234 may be configured to raise the alignment member 231 in the +Z direction after the end of the alignment member 231 completes contact with the bottom surface of the pre-battery module (100' in FIG. 7).

In an embodiment, the alignment member 231 may be configured to be inserted into an area where the heat blocking member 140 is to be inserted later. The alignment member 231 may be inserted into an area where the terrace portions 117 of the neighboring battery cells 111 and the electrode leads 114 of the neighboring battery cells 111 face each other.

The alignment member 231 may serve to keep the spacing between the battery cells 111 constant, to secure in advance the position where the heat blocking member (140 in FIG. 9) will be inserted, and to keep the volume of the separation space (S in FIG. 7) between the battery cells 111 constant.

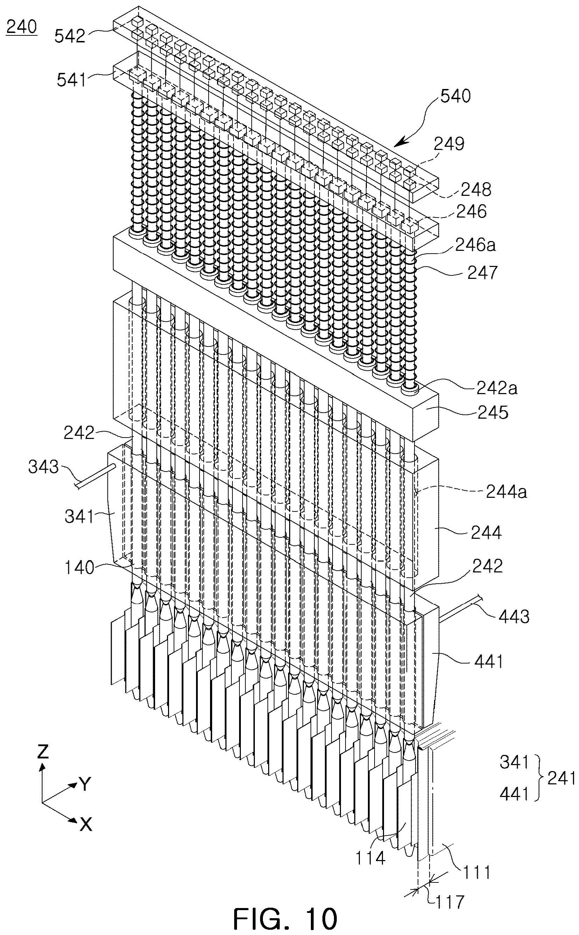

FIG. 9 schematically illustrates the heat blocking member insertion portion 240 according to an embodiment, and FIG. 10 is a diagram illustrating the operating state of the heat blocking member insertion portion 240 according to an embodiment.

As illustrated in FIGS. 9 and 10, the heat blocking member insertion portion 240 may include a grip member 241 that holds the heat blocking member 140 and supports the heat blocking member 140, a pressing member 242 that pressurizes the heat blocking member 140 supported by the grip member 241 and pushes the same into the separation space (S in FIG. 7) between the battery cells 111, and a pressing member moving portion 540 connected to the pressing member 242 and moving the pressing member 242.

In an embodiment, the pressing member moving portion 540 may include a first fixed frame 541 and a second fixed frame 542. A driving member 248 and a pressure sensor 249 may be provided inside the second fixed frame 542. The pressure sensor 249 may be connected to the driving member 248 and be provided to sense the pressure applied to the driving member 248.

In an embodiment, the driving member 248 may be provided as a servo drive, motor, or the like, but is not necessarily limited by the present disclosure.

In an embodiment, the driving member 248 may be applied as a motor having a drive shaft. A reducer may be connected to the drive shaft as needed, and the motor is connected to a control unit (not illustrated) so that the rotation speed, rotation direction, and rotation status may be automatically controlled. However, this is according to an embodiment, and the driving member 248 may be applied as a device such as a robot arm, CAM, or the like, and the type of the driving member 248 is not necessarily limited by the present disclosure. Hereinafter, the case where the driving member 248 is a motor will be described as an example.

A gearbox 246 connected to the driving member 248 and receiving the power of the driving member 248 may be provided inside the first fixed frame 541. The gearbox 246 may be connected to the drive shaft of the drive member 248 and may have a gear member (not illustrated) embedded therein that may convert rotational motion into linear reciprocating motion in the +Z and -Z directions. The gear member may include various gears such as racks, pinions, velvet gears, helical gears, and the like. The role of the gearbox 246 is to convert rotational motion into linear motion, and the type and number of gear members are not limited as long as the role is possible.

The pressure sensor 249 may be connected to the driving member 248 to obtain information on the pressure applied to the driving member 248. In an embodiment, a separate sensor member (not illustrated) may be provided to obtain information such as the rotation direction, rotation speed and the like of the driving member 248, and in this case, the sensor member (not illustrated) may be connected to a control unit (not illustrated). Accordingly, the control unit may receive information related to the rotation direction and rotation speed as well as the pressure information of the driving member 248.

In an embodiment, the control unit (not illustrated) receives values measured by the pressure sensor 249 and the sensor member (not illustrated), and may control the driving member 248 by comparing pieces of preset information and measured information so that the measured information matches the preset information.

According to the above principle, the alignment member moving portion (232 in FIG. 8) and the pressing member moving portion 540 maybe connected to the control unit (not illustrated) and sequentially controlled. Accordingly, the convenience and precision of inserting the heat blocking member 140 between the battery cells 111 may be improved.

A driving rod 246a may be connected to the gearbox 246. The driving rod 246a may be moved in the +Z and -Z directions. An elastic member 247 may be disposed on the outer periphery of the driving rod 246a.

The pressing member 242 may be connected to the bottom portion of the driving rod 246a. One end of the pressing member 242 may be in contact with the heat blocking member 140. As the pressing member 242 is moved in the -Z direction while in contact with the heat blocking member 140, the heat blocking member 140 may be moved in the -Z direction. The heat blocking member 140 may be pressed by the pressing member 242 and inserted between the terrace portions 117 and between the electrode leads 114 of the battery cell 111. This operation may be performed by rotating the driving member 248 in one direction.

In an embodiment, the pressing member moving portion 540 may further include a second pressing frame 245 disposed below the second fixed frame 542 and a first pressing frame 244 disposed below the second pressing frame 245.

The first pressing frame 244 may include a plurality of first through-holes 244a, and the second pressing frame 245 may include a plurality of second through-holes 245a. The first through-holes 244a and the second through-holes 245a may be provided in equal numbers, and the center of the first through-hole 244a and the center of the second through-hole 245a may be disposed on the same line in the Z-axis direction. At this time, the center of the first through-hole 244a and the center of the second through-hole 245a may be the center of the cross section of the first through-hole 244a and the center of the cross section of the second through-hole 245a on the X-Y plane.

The pressing member 242 may be inserted into the first through-hole 244a and the second through-hole 245a. The inner diameter of the first through-hole 244a and the inner diameter of the second through-hole 245a may be greater than the thickness of the pressing member 242. The pressing member 242 may be moved in the +Z direction and -Z direction while inserted into the first through-hole 244a and the second through-hole 245a. Accordingly, even when the length of the pressing member 242 is long or a relatively large load is applied to the pressing member 242, meandering of the pressing member 242 may be prevented and the pressing member 242 may be prevented from buckling, which may contribute to improving the accuracy and precision of device operation.

In an embodiment, the grip member 241 may be provided in a split type. The grip member 241 may include a first grip member 341 covering a certain area of the outer periphery of the heat blocking member 140, and a second grip member 441 facing the first grip member 341 and covering the outer peripheral area of the heat blocking member 140 that is not covered by the first grip member 341.

A first grip member moving portion 343 may be connected to the first grip member 341, and a second grip member moving portion 443 may be connected to the second grip member 441. The first grip member moving portion 343 and the second grip member moving portion 443 may be applied as a cylinder, a robot arm, or the like, but this is not necessarily limited by the present disclosure.

The first grip member moving portion 343 and the second grip member moving portion 443 may move the first grip member 341 and the second grip member 441, respectively, and the first grip member 341 and the second grip member 441 may be moved in a direction away from each other and in a direction closer to each other.

The first grip member moving portion 343 and the second grip member moving portion 443 may move the first grip member 341 and the second grip member 441 in a direction to approach each other, to support and fix the heat blocking member 140.

At this time, the heat blocking member 140 may be automatically supplied between the first grip member 341 and the second grip member 441 by a device such as a cassette (not illustrated), and may also be supplied manually by the operator.

The pressing member 242 may push the heat blocking member 140 between the battery cells 111 while the first grip member 341 and the second grip member 441 support the heat blocking member 140. The pressing member 242 may push the heat blocking member 140 in, in a state in which the plurality of battery cells 111 are located below the first grip member 341 and the second grip member 441.
In an embodiment, a stopper 242a may be provided on the other end of the pressing member 242 not in contact with the heat blocking member 140. The stopper 242a may be formed by the pressing member 242 protruding a certain length in the radial direction of the pressing member 242. The diameter of the stopper 242a may be larger than the inner diameter of the second through-hole 245a. The stopper 242a may be provided to contact the second pressing frame 245 when the pressing member 242 has completely moved in the -Z direction. Accordingly, even when the pressing member 242 has completed the movement thereof, the pressing member 242 may be prevented from leaving the second pressing frame 245. Therefore, the reliability of the movement of the pressing member 242 may be increased.

In an embodiment, the stopper 242a may be fixed to the driving rod 246a, and the pressing member 242 may be moved along the driving rod 246a. The elastic member 247 may be disposed between the stopper 242a and the first fixed frame 541. The elastic member 247 may act as a buffer to absorb shock when the pressing member 242 moves, which may contribute to increased durability of the device.

As illustrated in FIG. 10, the pressing member 242 pushes the heat blocking member 140 in the -Z direction so that the heat blocking member 140 may be completely inserted between the battery cells 111.

At this time, in a case in which the heat blocking member 140 is not fully inserted between the battery cells 111 and is hit by another obstacle or comes into contact with the battery cell 111, a pressure different from the preset pressure may be applied to the driving member 248. Then, this pressure information may be obtained from the pressure sensor 249, and the pressure sensor 249 may transmit a measured pressure value to the control unit (not illustrated).

In the case in which the preset pressure value and the measured pressure value are different, the control unit (not illustrated) may raise the pressing member 242 in the +Z direction by immediately stopping the operation of the driving member 248 or rotating the driving member 248 in the other direction. Accordingly, damage to the battery cell 111 and the assembly apparatus 200 of the pre-battery module 100' may be prevented, and the reliability of the assembly apparatus 200 of the pre-battery module 100' may be increased.

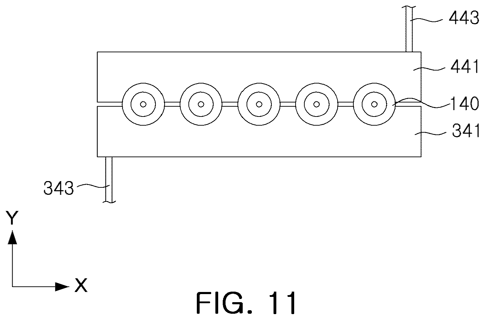

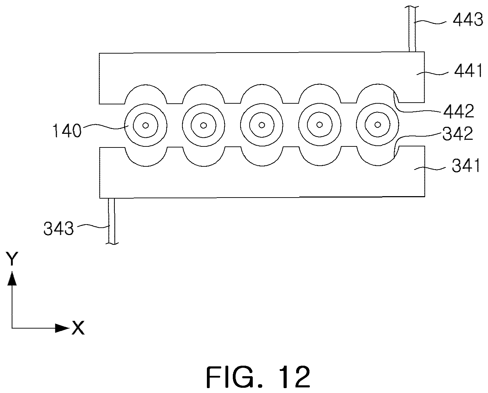

FIG. 11 is a bottom view of the grip member according to an embodiment, and FIG. 12 is an operating state diagram of FIG. 11.

As illustrated in FIGS. 11 and 12, the first grip member 341 may include a first support groove 342 having a shape corresponding to the outer peripheral surface of the heat blocking member 140, and the second grip member 441 may include a second support groove 442 having a shape corresponding to the outer peripheral surface of the heat blocking member 140.

The first support groove 342 and the second support groove 442 may have a semicircular shape. The radius of curvature of the first support groove 342 and the second support groove 442 may have a value at least equal to the radius of the heat blocking member 140.

Therefore, the first grip member 341 and the second grip member 441 move in a direction closer to each other, so that the heat blocking member 140 may be inserted into the first support groove 342 and the second support groove 442. The operation of inserting the heat blocking member 140 into the first support groove 342 and the second support groove 442 may be performed manually by an operator, and may be performed automatically while the heat blocking member 140 is supported on a cassette (not illustrated) or a backup pin (not illustrated).

For example, a member capable of supporting the load of the heat blocking member 140, such as a backup pin (not illustrated), is provided at the bottom portion of the heat blocking member 140, and while the load of the heat blocking member 140 is supported, the first grip member 341 and the second grip member 441 may move to the position where the heat blocking member 140 is supported.

As illustrated in FIG. 12, the first grip member 341 and the second grip member 441 may move in a direction to approach each other. When the movement of the first grip member 341 and the second grip member 441 is completed as illustrated in FIG. 11, fixing and supporting the heat blocking member 140 by the first grip member 341 and the second grip member 441 may be completed. Then, the pressing member (242 in FIG. 10) may push the heat blocking member 140 between the battery cells 111.

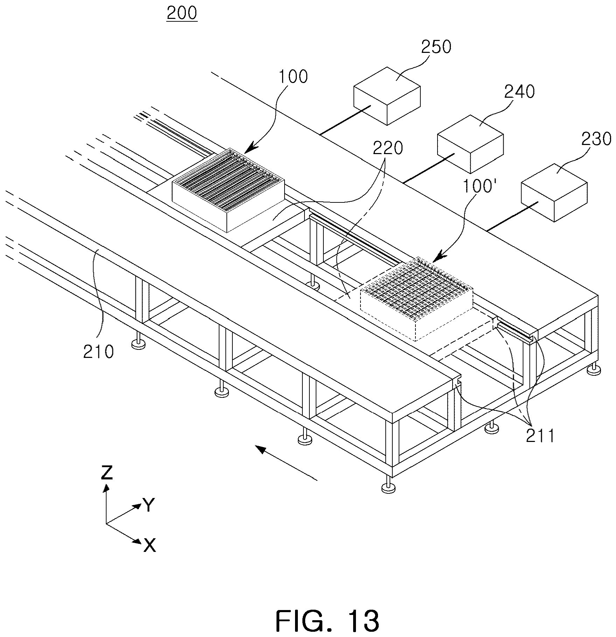

FIG. 13 schematically illustrates an assembly apparatus 200 for a battery module according to another embodiment. As illustrated in FIG. 13, the assembly apparatus 200 for a battery module according to another embodiment may further include an inspection unit 250.

The battery module entering the inspection unit 250 may be the battery module 100 in a state in which a heat blocking member (140 in FIG. 1) is inserted.

The inspection unit 250 may be provided on the device base 210, and the inspection unit 250 may be disposed to follow the heat blocking member insertion portion 240 in the direction of movement of the worktable 220. Therefore, by simply moving the pre-battery module 100' along the device base 210 while seated on the work table 220, not only the heat blocking member (140 in FIG. 1) insertion process but also the assembly state inspection process may be completed. Accordingly, the time consumed in the assembly and inspection work of the pre-battery module 100' or the battery module 100 may be shortened, and the convenience of assembly work and productivity of the battery module may be improved.

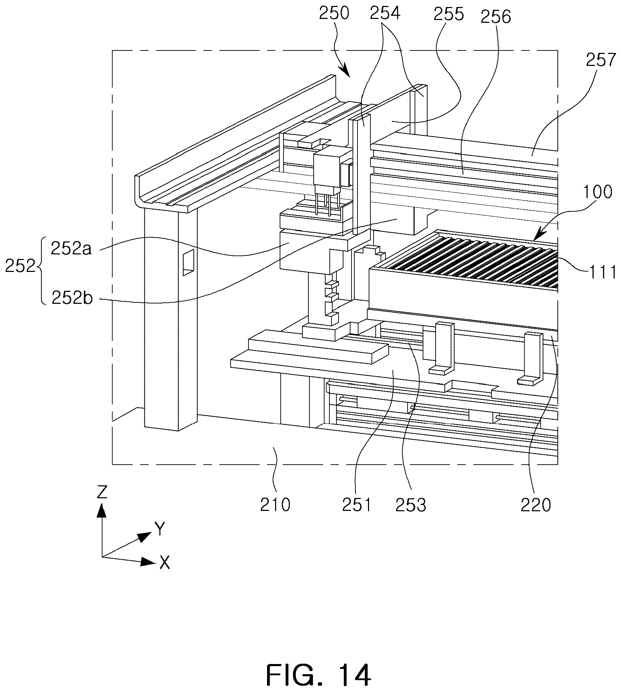

FIG. 14 schematically illustrates the inspection unit 250 according to an embodiment.

As illustrated in FIG. 14, the inspection unit 250 according to an embodiment may be provided to obtain at least one of the height information of the battery module 100, the height information of the battery cell 111, and the height information of the heat blocking member 140 from the device base 210.

In an embodiment, the inspection unit 250 may include a support frame 251 provided on the device base 210 and at least one position sensor 252 provided on the support frame 251.

First, the support frame 251 may be installed in a certain section of the device base 210, and an inspection unit first LM guide 253 engaged with the worktable 220 may be installed on the support frame 251. The worktable 220 may enter the support frame 251 along the inspection unit first LM guide 253, but this is according to an embodiment, and thus the worktable 220 may be moved by a device other than the LM guide.

In an embodiment, an inspection unit moving frame 257 may be installed above the support frame 251, and an inspection unit second LM guide 256 may be installed on the inspection unit moving frame 257. A pair of sensor frames 254 may be engaged with the inspection unit second LM guide 256. A pair of sensor frames 254 may be connected to each other by a connection frame 255. However, the pair of sensor frames 254 may be provided integrally.

In an embodiment, a pair of sensor frames 254 may be moved in the +X direction and -X direction on the inspection unit moving frame 257 along the inspection unit second LM guide 256.

A first position sensor 252a may be installed on one sensor frame 254, and a second position sensor 252b may be installed on the other sensor frame 254. The first position sensor 252a may face the electrode lead 114 on one side of the battery cell 111, and the second position sensor 252b may face the electrode lead on the other side of the battery cell 111. For example, one electrode lead 114 may be a positive electrode lead, and the other electrode lead may be a negative electrode lead.

Therefore, by moving the sensor frame 254 in the +X direction and -X direction, position information on the positive electrode lead 114 side of the battery cell 111 and position information on the negative electrode lead 114 side may be obtained simultaneously. This position information may include the alignment state of the battery cells 111 and the insertion state of the heat blocking member 140 inserted between the battery cells 111.

In an embodiment, the first position sensor 252a and the second position sensor 252b may include at least one of a vision camera and a laser sensor. The first position sensor 252a and the second position sensor 252b may be connected to a control unit (not illustrated).

When applying the first position sensor 252a and the second position sensor 252b as a vision camera, the vision camera acquires image information of the battery module 100 and transmits or directly displays the alignment state of the battery module 100 and the insertion state of the heat blocking member 140 to the control unit (not illustrated), thereby allowing the alignment of the battery module 100 to be directly checked with the naked eye.

For example, by a vision camera, information when the spacing between the battery cells 111 is inappropriate, the heat blocking member 140 is not disposed between the battery cells 111, or the location or number of the heat blocking members 140 is inappropriate, may be qualitatively obtained.

On the other hand, in the case of a laser sensor, a plurality of laser sensors may be provided, thereby obtaining X-axis, Y-axis, and Z-axis information of the battery module 100. The plurality of laser sensors may measure the distance to the battery module 100 or the heat blocking member 140 and transmit the measured distance to the control unit (not illustrated). The control unit (not illustrated) may be provided to determine the alignment state of the battery module 100 or the heat blocking member 140 as normal or abnormal by comparing preset information and measured information.

For example, in the case of a laser sensor, it is possible to calculate distance values, coordinate values, and the like. and thus, information in cases where the spacing of the battery cells 111 is inappropriate, the heat blocking member 140 may not be disposed between the battery cells 111, or the location or number of the heat blocking members 140 may be inappropriate may be quantitatively obtained.

Additionally, in an embodiment, a vision camera and a laser sensor may be used in combination.

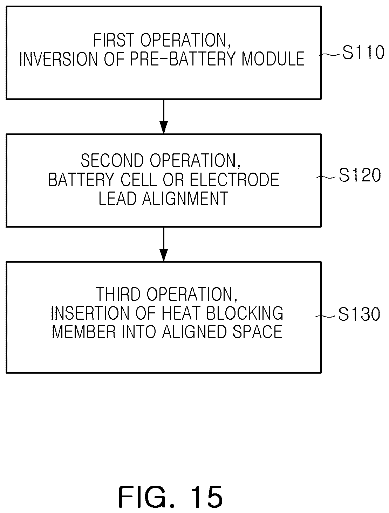

On the other hand, FIG. 15 is a conceptual diagram of a method of assembling a battery module (100 in FIG. 13) according to an embodiment.

The pre-battery module 100' is in a state before the heat blocking member (140 in FIG. 1) is inserted, and a method of assembling a battery module according to an embodiment of the present disclosure may relate to making a battery module by inserting or assembling a heat blocking member (140 in FIG. 1) into the pre-battery module 100'.

As illustrated in FIG. 15, the method of assembling a battery module (100 in FIG. 13) according to an embodiment provides a method of inserting or assembling a heat blocking member (140 in FIG. 1) into a pre-battery module (100' in FIG. 13) including a cell assembly (110 in FIG. 1) including a plurality of battery cells (111 in FIG. 1) that include a case (112 in FIG. 1) containing an electrode assembly (113 in FIG. 1), a sealing portion (115 in FIG. 1) formed by sealing the case (112 in FIG. 1) and an electrode lead (114 in FIG. 1) exposed to the outside of the case (112 in FIG. 1), a bus bar assembly (120 in FIG. 1) electrically connected to the electrode lead (114 in FIG. 1), and a plate portion (130 in FIG. 1) covering the cell assembly (110 in FIG. 1) and the bus bar assembly (120 in FIG. 1), thereby assembling as the battery module (100 in FIG. 13).

The method of assembling the battery module (100 in FIG. 13) may include, first, an operation (S110) of inverting the pre-battery module (100' in FIG. 13) in which the heat blocking member (140 in FIG. 1) is not inserted, an operation (S120) of aligning the plurality of battery cells (111 in FIG. 1), and an operation (S130) of inserting a solid heat blocking member into a separation space (S in FIG. 2) formed by the sealing portion (115 in FIG. 1) of a pair of neighboring battery cells (111 in FIG. 1), the electrode lead (114 in FIG. 1) of the pair of battery cells (111 in FIG. 1), and the bus bar assembly (120 in FIG. 1), to thereby be assembled as the battery module.

The task of inserting the heat blocking member (140 in FIG. 1) into the pre-battery module (100' in FIG. 13) may be performed after the fourth plate member (134 in FIG. 1) is covered on the top portion of the pre-battery module (100' in FIG. 13) and also before the third plate member (133 in FIG. 5) is assembled to the bottom portion of the pre-battery module (100' in FIG. 13).

Since the top portion of the pre-battery module (100' in FIG. 13) is covered with the fourth plate member (134 in FIG. 1), the pre-battery module (100' in FIG. 13) may be inverted, such that the separation space (S in FIG. 2) is placed on the top portion of the pre-battery module (100' in FIG. 13) and the fourth plate member (134 in FIG. 1) is placed on the bottom of the pre-battery module (100' in FIG. 13).

After completing the operation (S110) of inverting the pre-battery module (100' in FIG. 13), the operation (S120) of aligning the plurality of battery cells (111 in FIG. 1) may be performed. In this operation, the positions of the battery cells (111 in FIG. 1) or the electrode leads (114 in FIG. 1) may be aligned to provide a space into which the heat blocking member (140 in FIG. 1) is inserted. According to the operation (S120) of aligning the plurality of battery cells (111 in FIG. 1), the heat blocking member (140 in FIG. 1) may be uniformly and consistently inserted between the battery cells (114 in FIG. 1).

After completing the operation (S120) of aligning the plurality of battery cells (111 in FIG. 1), the operation (S130) of inserting a solid heat blocking member (140 in FIG. 1) into a separation space formed by the sealing portion of a pair of neighboring battery cells (115 in FIG. 1), the electrode lead of the pair of battery cells (114 in FIG. 1), and the bus bar assembly (120 in FIG. 1) and of assembling the same as a battery module may be performed. At this stage, the heat blocking member (140 in FIG. 1) may be inserted into the separation space (S in FIG. 2) in which the alignment is completed. This operation may be performed automatically or manually by an operator.

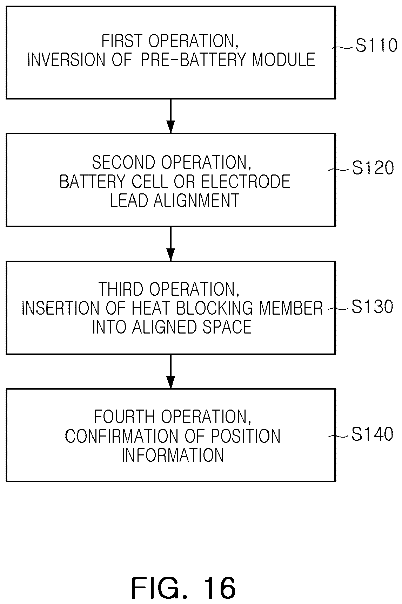

FIG. 16 is a conceptual diagram of a method of assembling a battery module (100 in FIG. 13) according to another embodiment.

As illustrated in FIG. 16, a method of assembling the battery module (100 in FIG. 13) according to an embodiment may further include an operation (S140) of obtaining at least one of the height information of the heat blocking member (140 in FIG. 1) inserted into the separation space (S in FIG. 2) and the height information of the battery cell (111 in FIG. 1), the operation (S140) being performed after the operation (S130) of inserting the solid heat blocking member (140 in FIG. 1) into the separation space (S in FIG. 2) formed by the sealing portion (115 in FIG. 1) of a pair of neighboring battery cells (111 in FIG. 1), the electrode lead (114 in FIG. 1) of the pair of battery cells (111 in FIG. 1), and the bus bar assembly (120 in FIG. 1) and of assembling the same as the battery module.

The operation (S140) of acquiring at least one of the height information of the heat blocking member (140 in FIG. 1) and the height information of the battery cell (111 in FIG. 1) may be an operation of inspecting the battery module (100 in FIG. 13) in which the assembly of the heat blocking member (140 in FIG. 1) has been completed, to determine whether the battery module (100 in FIG. 13) is defective. This operation may be performed by at least one device selected from a vision camera or a laser sensor.

Additionally, in an embodiment, the operation (S140) of acquiring at least one of the height information of the heat blocking member (140 in FIG. 1) and the height information of the battery cell (111 in FIG. 1) may be performed after aligning the plurality of battery cells. In an embodiment, pieces of location information of the heat blocking member (140 in FIG. 1) and the battery cell (111 in FIG. 14) may be obtained together.

In addition, the operation (S140) of acquiring at least one of the height information of the heat blocking member (140 in FIG. 1) inserted into the separation space (S in FIG. 2) and the height information of the battery cell (111 in FIG. 14) may include an operation of determining defective battery module (100 in FIG. 13) by comparing measured values of the height information of the battery cells (111 in FIG. 14) and a measured value of the height information of the heat blocking member (140 in FIG. 1) with preset setting values. This operation (S140) may be performed automatically using a PLC device, or the like. In an embodiment, when the height measurement value of the heat blocking member (140 in FIG. 1) is different from the preset height value of the heat blocking member (140 in FIG. 1), or when the height measurement value of the battery cell (111 in FIG. 14) is different from the preset height value of the battery cell (111 in FIG. 14), it may be judged as defective.

The present disclosure may be implemented in a variety of electrochemical devices, including, for example, digital cameras, cell phones, laptop computers, hybrid vehicles, electric vehicles, energy storage systems, wind generators, and other green tech power generators.

Additionally, the present disclosure may be implemented in various electrochemical devices utilizing secondary batteries, and may be implemented in devices for preventing climate change by suppressing air pollution and greenhouse gas emissions.

As set forth above, according to an example embodiment, a battery module having delayed thermal runaway and heat propagation is provided.

A battery module in which thermal runaway and heat propagation are prevented and durability is improved is provided.

A battery module having improved convenience and efficiency of assembly work is provided.

In addition, according to example embodiments, a battery module that may be widely applied in green technology fields such as solar power generation and wind power generation is provided.

In addition, according to example embodiments, a battery module that may be applied to eco-friendly devices such as eco-friendly electric vehicles, hybrid vehicles and the like to prevent climate change by suppressing air pollution and greenhouse gas emissions is provided.

The content described above is merely an example of applying the principles of the present disclosure, and other configurations may be further included or replaced with other configurations without departing from the scope of the present disclosure.

Only specific examples of implementations of certain embodiments are described. Variations, improvements and enhancements of the disclosed embodiments and other embodiments may be made based on the present disclosure. Additionally, the above-described embodiments may be implemented by deleting some components, and each embodiment may be implemented in combination with each other.

## Claims

1. A battery module comprising:
a cell assembly including a plurality of battery cells including a case containing an electrode assembly, a sealing portion formed by sealing the case, and an electrode lead exposed to an outside of the case;
a bus bar assembly electrically connected to the electrode lead;
a plate portion covering the cell assembly and the bus bar assembly; and
at least one heat blocking member disposed to face the sealing portion and the bus bar assembly,
wherein the heat blocking member is solid.

2. The battery module of claim 1, wherein the heat blocking member is disposed in a separation space formed by a sealing portion of a pair of neighboring battery cells, an electrode lead of the pair of battery cells and the bus bar assembly, and is inserted into the separation space in a solid state.

3. The battery module of claim 1 or 2, wherein the heat blocking member is disposed to face the sealing portion and the bus bar assembly in a cross-section of the battery cell in a thickness direction.

4. The battery module of any one of the preceding claims, wherein the heat blocking member is provided in plural and respectively disposed between the pair of neighboring battery cells.

5. The battery module of any one of the preceding claims, wherein a height of the heat blocking member in a cross section of the battery cell in a height direction has a value of 90% or more and 110% or less of a height of the battery cell.

6. The battery module of any one of the preceding claims, wherein the heat blocking member includes a first inclined area, inclined from one end toward a center of the heat blocking member based on a height direction, and has a thinnest thickness on the one end.

7. The battery module of claim 6, wherein the heat blocking member includes a second inclined area, inclined from the other end toward the center thereof based on the height direction of the heat blocking member, and has a thickness on the other end, being the same as the thickness on the one end.

8. The battery module of any one of the preceding claims, wherein the heat blocking member is formed of a material containing at least one of polyurethane, silica gel, a polymer material containing glass fiber, and mica.

9. An assembly apparatus for a battery module, comprising:
a device base;
a worktable provided with a pre-battery module seated thereon and moving on the device base, the pre-battery module including a cell assembly including a plurality of battery cells including a case containing an electrode assembly, a sealing portion formed by sealing the case and an electrode lead exposed to an outside of the case, a bus bar assembly electrically connected to the electrode lead, and a plate portion covering the cell assembly and the bus bar assembly;
a cell assembly alignment portion including an alignment member inserted into a separation space formed by a sealing portion of a pair of the battery cells neighboring each other, electrode leads of the pair of battery cells, and the bus bar assembly; and
a heat blocking member insertion portion inserting a solid type of a heat blocking member into the separation space when the alignment member is separated from the separation space and assembling as the battery module.

10. The assembly apparatus for a battery module of claim 9, wherein the cell assembly alignment portion further includes an alignment member moving portion connected to the alignment member and moving the alignment member.

11. The assembly apparatus for a battery module of claim 9 or 10, wherein the heat blocking member insertion portion includes,
a grip member supporting the heat blocking member;
a pressing member pushing the heat blocking member supported by the grip member, into the separation space; and
a pressing member moving portion connected to the pressing member and moving the pressing member.

12. The assembly apparatus for a battery module of claim 11, wherein the heat blocking member insertion portion further includes a pressure sensor connected to at least one of the pressing member and the pressing member moving portion and obtaining information on pressure applied to at least one of the pressing member and the pressing member moving portion.

13. The assembly apparatus for a battery module of claim 11, wherein the grip member includes,
a first grip member including a first support groove having a shape corresponding to an outer peripheral surface of the heat blocking member; and
a second grip member including a second support groove having a shape corresponding to the outer peripheral surface of the heat blocking member, and
the heat blocking member insertion portion further includes a grip member moving portion connected to the first grip member and the second grip member and moving the first grip member and the second grip member.

14. The assembly apparatus for a battery module of any one of claims 9 to 13, further comprising an inspection unit provided on the device base and acquiring at least one of height information of the battery cell and height information of the heat blocking member when the battery module is seated on the worktable,
wherein the inspection unit includes,
a support frame provided on the device base; and
a position sensor provided on the support frame and acquiring at least one of height information of the battery cell and height information of the heat blocking member when the worktable enters the support frame.

15. A method of assembling a battery module, as a method of assembling a pre-battery module including a cell assembly containing a plurality of battery cells including a case containing an electrode assembly, a sealing portion formed by sealing the case and an electrode lead exposed to an outside of the case, a bus bar assembly electrically connected to the electrode lead, and a plate portion covering the cell assembly and the bus bar assembly, the method comprising:
inverting the pre-battery module;
aligning the plurality of battery cells;
assembling the battery module by inserting at least one solid heat blocking member into a separation space formed by a sealing portion of a pair of neighboring battery cells, an electrode lead of the pair of battery cells, and the bus bar assembly; and
obtaining at least one of height information of the heat blocking member inserted into the separation space and height information of the battery cell, after the aligning the plurality of battery cells.
